Europäisches Patentamt

European Patent Office

Office européen des brevets

(19)

(11) Veröffentlichungsnummer: **0 268 128**
**B1**

(12) **EUROPÄISCHE PATENTSCHRIFT**

(45) Veröffentlichungstag der Patentschrift:
03.01.90

(51) Int. Cl.⁴: **F16K 3/08, F16K 27/04**

(21) Anmeldenummer: 87116062.8

(22) Anmeldetag: 31.10.87

(54) Ventiloberteil.

(30) Priorität: 08.11.86 DE 3638180

(43) Veröffentlichungstag der Anmeldung:
25.05.88 Patentblatt 88/21

(45) Bekanntmachung des Hinweises auf die Patenterteilung:
03.01.90 Patentblatt 90/1

(84) Benannte Vertragsstaaten:
AT BE CH DE ES FR GB GR IT LI LU NL SE

(56) Entgegenhaltungen:
DE-A- 3 127 713
DE-A- 3 323 008
DE-C- 3 207 895
FR-A- 2 518 697

(73) Patentinhaber: Flühs Drehtechnik GmbH., Lösenbacher Landstrasse 2, D-5880 Lüdenscheid 6(DE)

(72) Erfinder: Lange, Peter, Teutonenstrasse 80 b, D-5880 Lüdenscheid(DE)

(74) Vertreter: Dörner, Lothar, Dipl.-Ing., Stresemannstrasse 15, D-5800 Hagen 1(DE)

ACTORUM AG

## Beschreibung

Die Erfindung betrifft ein Ventiloberteil für Sanitärarmaturen mit einem in einem Ventilgehäuse befestigbaren hülsenartigen Kopfstück und mit einer das Kopfstück mittig durchsetzenden, einen Steckkopf aufweisenden drehbaren Spindel, an der außen Ringflächen, mit denen die Spindel in dem Kopfstück radial geführt ist, und die Ringflächen unterbrechende Nuten vorgesehen sind, die zum Teil Dichtringe aufnehmen.

Ventiloberteile der vorgenannten Art sind aus der DE-C-3 207 895 und der DE-A-3 323 008 bekannt. Bei den bekannten Ventiloberteilen tritt folgendes Problem auf: Zwischen der Spindel und dem Kopfstück besteht ein geringes radiales Spiel, welches sich über den Steckkopf auf den aufgesteckten Armaturen-Handgriff überträgt und - da der Handgriff einen wesentlich größeren Radius aufweist als die Spindel - den Anschein vermittelt, es bestünde erhebliches Spiel. Außerdem kann es bei an der Wand horizontal montierten Armaturen mit Ventiloberteil und schweren Hand griffen, die asymmetrisch ausgeführt sind und daher ein Drehmoment auf die Spindel des Ventiloberteils ausüben, dazu kommen, daß bei geöffnetem Ventil die Handgriffe selbsttätig aus einer radial oberen Lage in eine radial untere Lage schwenken.

Hier will die Erfindung Abhilfe schaffen. Der Erfindung liegt die Aufgabe zugrunde, ein Ventiloberteil der eingangs genannten Art so auszubilden, daß Spiel zwischen Spindel und Kopfstück und ungewollte Schenkbewegungen zwischen Spindel und Kopfstück vermieden werden. Gemäß der Erfindung wird diese Aufgabe dadurch gelöst, daß das Kopfstück an der dem Steckkopf zugewandten Innenkante mit einer ringförmigen Ausnehmung versehen ist, in die ein im wesentlichen hülsenförmiges, vorgespanntes und in Grenzen elastisches Lager in Anlage an eine der Ringflächen der Spindel und in Rasteingriff in eine der Nuten eingepreßt ist.

Das vorgespannte Lager verhindert sowohl Spiel zwischen Spindel und Kopfstück in Radialrichtung als auch das ungewollte Schwenken der Spindel in dem Kopfstück, auch bei horizontalem Einbau des Ventiloberteils und einem schweren asymmetrischen Handgriff der Armatur. Ein weiterer Vorteil der Erfindung besteht darin, daß das Lager die Funktion sowohl des Federsteckers als auch eines der Dichtringe übernimmt.

Ein Ausführungsbeispiel der Erfindung ist in der Zeichnung dargestellt und wird im folgenden näher beschrieben. Es zeigen:

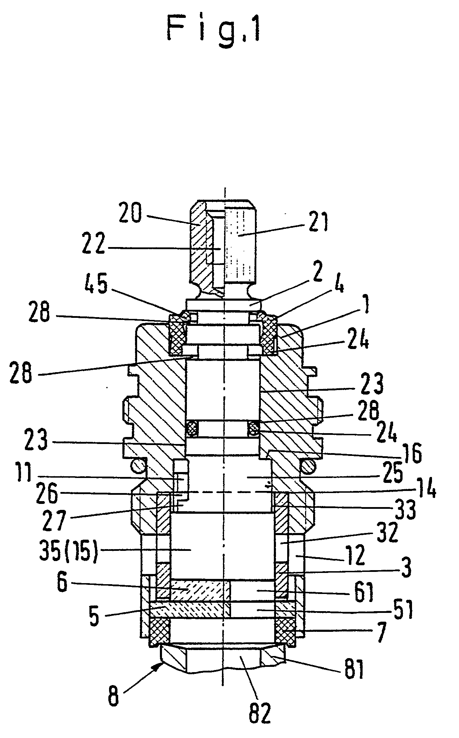

Fig. 1 ein Ventiloberteil im Längsschnitt;
Fig. 2 einen im Maßstab 5 : 1 vergrößerten Ausschnitt aus Fig. 1 im Bereich des Lagers.

Das als Ausführungsbeispiel gewählte Ventiloberteil wird in ein Geehäuse einer Sanitärarmatur geschraubt, von der nur ein Teil des Wasserzulaufkanals dargestellt ist. Das Ventiloberteil weist ein Kopfstück 1, eine das Kopfstück 1 mittig durchsetzende und in ihm radial geführte Spindel 2 sowie einen mit der Spindel 2 formschlüssig verbundenen und im Kopfstück 1 radial geführten Mitnehmer 3 auf. Zwischen Kopfstück 1 und Spindel 2 ist auf der dem Wasserzulauf abgewandten Seite ein Lager 4 angeordnet. Wasserzulaufseitig hält das Kopfstück 1 im Bereich seiner Stirnseite eine erste Ventilsitzscheibe 5 aus keramischem Matrial und einen über die Stirnseite vorstehenden Dichtring 7. Wasserzulaufseitig ist an der Stirnseite des Mitnehmers 3 eine zweite Ventilsitzscheibe 6 aus keramischem Material vorgesehen.

Das Kopfstück 1 ist hülsenarig ausgebildet, besteht also aus einem drehsymmetrischen Hohlkörper, allerdings mit unterschiedlichen Innendurchmessern, dessen beide Stirnflächen offen sind. Im wesentlichen mittig weist das Kopfstück 1 innen axial im Abstand voneinander zwei Schultern 14, 16 auf. Die Spindel 2 ist im wesentlichen massiv ausgeführt und weist einen Steckkopf 20 auf, der als Vielkant 21 ausgeführt und innen mit einem Sackloch 22 mit Innengewinde für die Befestigung eines nicht dargestellten Handgriffs versehen ist. Außen sind an der Spindel 2 Ringflächen 23 vorgesehen, mit der die Spindel 2 in dem Kopfstück 1 radial geführt ist. Die Ringflächen 23 sind durch Nuten 28 unterbrochen. In der wasserzulaufseitigen Nut ist ein Dichtring 24 untergebracht, der einen Teil der Dichtung zwischen Spindel 2 und Kopfstück 1 übernimmt.

In dem Bereich zwischen der Schulter 16 und der dem Steckkopf 20 zugewandten Stirnseite ist das Kopfstück 1 innen als Hohlzylinder für die Führung der Spindel 2 ausgebildet. An der dem Steckkopf 20 zugewandten Innenkante ist das Kopfstück 1 mit einer ringförmigen Ausnehmung 17 versehen. In die Ausnehmung 17 ist das Lager 4 eingebracht. Das Lager 4 ist vorgespannt und in Grenzen elastisch. Es ist beispielsweise aus einer Polyamid-Molybdän-Mischung hergestellt. Das Lager 4 ist in Anlage an eine der Ringflächen 23 der Spindel 2 und in Rasteingriff in die steckkopfseitige Nut 28 eingepreßt.

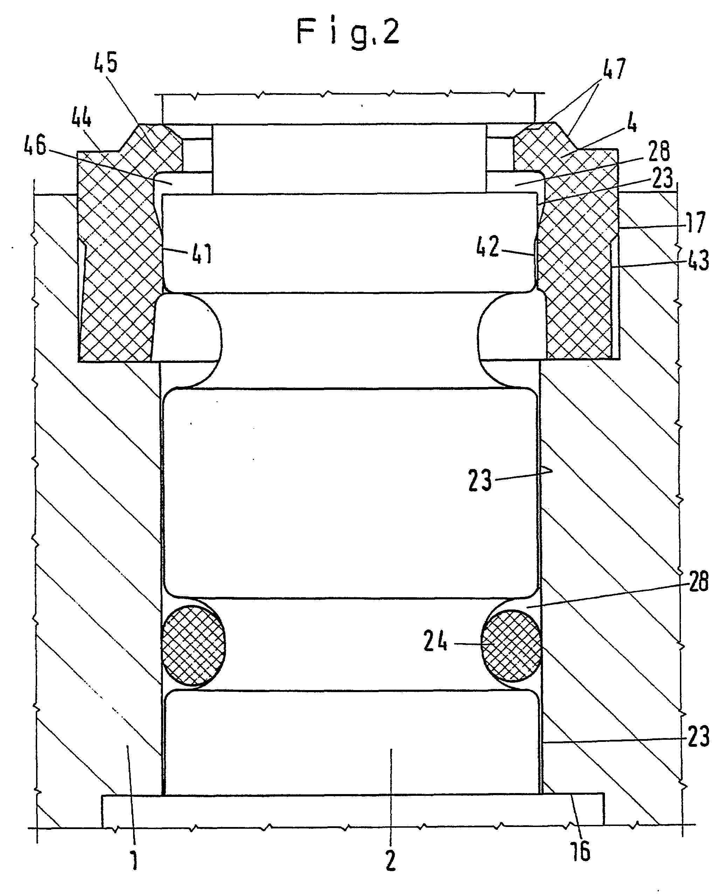

Das Lager 4 weist in dem an einer der Ringflächen 23 der Spindel 2 anliegenden Bereich 41 vor dem Einpressen einen Innendurchmesser auf, der kleiner ist als der Außendurchmesser der Ringfläche 23. Dieser Bereich ist als "Negativfeld" 42 in Fig. 2 rechts dargestellt. An der dem Steckkopf 20 abgewandten Außenkante ist das Lager 4 mit einer zylindermantelartigen Ausnehmung 43 versehen. Nach dem Einpressen des Lagers 4 in die Ausnehmung 17 des Kopfstücks 1 - Fig. 2 Darstellung linke Hälfte - wird der Bereich 41 auf einen Innendurchmesser gepreßt, der gleich dem Außendurchmesser der Ringfläche 23 ist. Da das Lager 4 ausweichen muß, erfolgt durch die Aufhebung des Negativfeldes 42 die Anlage der wasserzulaufseitigen Außenkante des Lagers 4 an die benachbarte Innenkante der Ausnehmung 17 in dem Kopfstück 1; es erfolgt gleichzeitig eine Zunahme des Preßdrucks im Bereich zwischen der Ausnehmung 43 des Lager 4 und der dem Steckkopf 20 abgewandten Stirnfläche in der Ausnehmung 17 des Kopfstücks 1. Der verformte Bereich, der durch Verdrängung des Negativfeldes 42 entsteht, sichert einmal die Dichtung zwischen Spindel 2 und Kopfstück 1; er tritt an die Stelle eines weiteren Dichtrings. Der Anpreßdruck verhindert auß-erdem, daß die Spindel 2 bezogen auf das Kopfstück 1 sich unfreiwillig drehen kann, auch wenn durch einen schweren asymmetrischen Handgriff wesentliche Drehmomente aufgebracht werden.

Das Lager 4 ist an der dem Steckkopf 20 zugewandten Stirnseite mit einer kreisringförmigen Auflagefläche 44 für einen nicht dargestellten Eindrück·ring versehen. Mit Hilfe dieses Eindrückrings wird das Lager 4 in das Kopfstück 1 eingedrückt.

Auf der dem Steckkopf 20 zugewandten Seite ist weiterhin an das Lager 4 ein Innenflansch 45 angeformt. Der Innenflansch 45 rastet in die äußere der Nuten 28 der Spindel 2 ein. Zwischen in die Nut 28 einrastender Innenflansch 45 und an der Ringfläche 23 andrückender Anlagefläche 44 ist eine ringförmige Hohlkehle 46 vorgesehen. Die Kanten 47 des Innenflansches 45 sind abgeschrägt. Der Innenflansch 45 rastet in die zugeordnete Nut 28 ein. Hohlkehle 46 und abgeschrägte Kanten 47 erleichtern das Einrasten. Das Lager 4 mit seinem Innenflansch 45 übernimmt so die Funktion eines sonst notwendigen Federsteckers: Das Lager 4 verhindert, daß die Spindel 2 wasserzulaufseitig aus dem Kopfstück 1 herausfallen kann.

Die Spindel 2 ist in dem Kopfstück 1 nur begrenzt drehbar: Im Anschluß an die Schulter 16 ist das Kopfstück 1 auf der der Schulter 14 zugewandten Seite mit einem nach innen vorspringenden Teilring 11 versehen, dessen Ende Anschläge bilden. Auf der dem Steckkopf 20 entgegengesetzten Seite ist außen an die Spindel 2 ein T-förmiger Quersteg 25 angeformt. Der Quersteg 25 liegt mit seiner dem Steckkopf 20 zugewandten Fläche an der Schulter 16 des Kopfstücks 1 an. Der Quersteg 25 ist an seinem einen Ende mit einer Aussparung 26 versehen, deren Abmessungen gleich denen der Anschläge an dem Teilring 11 sind. Die Aussparung 26 ist durch einen Vorsprung 27 am freien Ende des Querstegs 25 begrenzt. Der Quersteg 25 ist zwischen den Anschlägen an dem Teilring 11 in der Kopfstück 1 drehbar.

Ein flanschartig nach innen gezogener Rand 33 des Mitnehmers 3 ist mit Aufnahmen versehen, in die von der Spindel 2 einerseits nur der Vorsprung 27, andererseits der Quersteg 25 selbst eingreifen.

Im Anschluß an die dem Wasserzulauf zugewandte Stirnseite sind Durchtrittsöffnungen 12 in dem Kopfstück 1 vorgesehen. Die Durchtrittsöffnungen 12 sind von einem ringförmigen Schlitz gebildet, der durch zwei Längsstege 15 unterteilt ist. Der Mitnehmer 3 ist als hohlzylindrische Hülse mit Durchtrittsöffnungen 32 in der Wandung ausgebildet. Die Druchtrittsöffnungen 32 sind von einem ringförmigen Schlitz gebildet, der durch zwei Längsstege 35 unterteilt ist. Die Durchtrittsöffnungen 32 in dem Mitnehmer 3 und die Durchtrittsöffnungen 12 in dem Kopfstück 1 liegen in derselben Querebene.

Die Ventilsitzscheibe 5, die von dem Kopfstück 1 gehalten ist, ist in der Ansicht kreisförmig. Sie weist eine halbkreisförmige Durchtrittsöffnung 51 auf. Die zweite Ventilsitzscheibe 6 liegt auf der dem Wasserzulauf abgewandten Seite an der ersten Ventilsitzscheibe 5 an. Sie ist ebenfalls mit einer halbkreisförmigen Durchtrittsöffnung 61 versehen.

Das Kopfstück 1 drückt über die erste ortsfeste Ventilsitzscheibe 5 den Dichtring 7 auf einen Ventilsitz 81 im Wasserzulauf 82 des Gehäuses 8. Nach der Befestigung des Kopfstücks 1 an dem Gehäuse bleibt die Lage des Dichtrings 7 unverändert. Durch Drehung der Spindel 2 wird der Mitnehmer 3 und mit ihm die zweite Ventilsitzscheibe 6 bezogen auf die erste Ventilsitzscheibe 5 in Anlage aneinander gedreht, sodaß die Durchtrittsöffnung 51 in der Ventilsitzscheibe 5 durch die Ventilsitzschreibe 6 vollständig oder im gewünschten Maß geöffnet und geschlossen wird. Zufließendes Wasser fließt über die Durchtrittsöffnungen 12 und 32 im Kopfstück 1 und im Mitnehmer 3 ab.

Das Ventiloberteil ist Bestandteil von Armaturen, die im Sanitärbereich eingesetzt werden.

**Patentansprüche**

1. Ventiloberteil für Sanitärarmaturen mit einem in einem Ventilgehäuse (8) befestigbaren hülsenartigen Kopfstück (1) und mit einer das Kopfstück (1) mittig durchsetzenden, einen Steckkopf (20) aufweisenden drehbaren Spindel (2), an der außen Ringflächen (23), mit denen die Spindel (2) in dem Kopfstück (1) radial geführt ist, und die Ringflächen (23) unterbrechende Nuten (28) vorgesehen sind, die zum Teil Dichtringe (24) aufnehmen, dadurch gekennzeichnet, daß das Kopfstück (1) an der dem Steckkopf (20) zugewandten Innenkante mit einer ringförmigen Ausnehmung (17) versehen ist, in die ein im wesentlichen hülsenförmiges, vorgespanntes und in Grenzen elastisches Lager (4) in Anlage an eine der Ringflächen (23) der Spindel und in Rasteingriff in eine der Nuten (28) gepreßt ist.

2. Ventiloberteil nach Anspruch 1, dadurch gekennzeichnet, daß das Lager (4) in dem zur Anlage an eine der Ringflächen (23) der Spindel (2) vorgesehenen Bereich (41) einen Innendurchmesser aufweist, der kleiner ist als der Außendurchmesser der Ringfläche (23) und an der dem Steckkopf (20) abgewandten Außenkante mit einer zylindermantelartigen Ausnehmung (43) versehen ist.

3. Ventiloberteil nach Anspruch 1 oder 2, dadurch gekennzeichnet, daß das Lager (4) an der dem Steckkopf (20) zugewandten Stirnseite mit einer kreisförmigen Auflagefläche (44) für einen Eindrückring versehen ist.

4. Ventiloberteil nach einem der Ansprüche 1 bis 3, dadurch gekennzeichnet, daß auf der dem Steckkopf (20) zugewandten Seite an das Lager (4) ein Innenflansch (45) angeformt ist, der in eine der Nuten (28) einrastet.

5. Ventiloberteil nach Anspruch 4, dadurch gekennzeichnet, daß die Kanten (47) des Innenflansches (45) abgeschrägt sind.

6. Ventiloberteil nach einem der Ansprüche 1 bis 5, dadurch gekennzeichnet, daß zwischen in die Nut (28) einrastendem Innenflansch (45) und an die Ringfläche (23) angepreßtem Bereich (41) eine ringförmige Hohlkehle (46) vorgesehen ist.

7. Ventiloberteil nach einem der Ansprüche 1 bis 6, dadurch gekennzeichnet, daß das Lager (4) aus einer Polyamid-Molybdän-Mischung hergestellt ist.

## Claims

1. Valve insert for sanitary fittings with a sleeve-type head unit (1) capable of being secured within a valve housing (8) and with a rotatable spindle (2) located within head unit (1) and with a socket head (20), annular faces (23), by means of which spindle (2) is radially guided within head unit (1), being provided on the outside of said spindle as well as grooves (28) breaking the annular faces (23), with said grooves in part accommodating sealing rings (24), characterized in that head unit (1) is provided at the inner edge facing socket head (20) with an annular recess (17) to which a substantially sleeve-shaped, prestressed and within limits elastic bearing (4) is pressed so as to abut one of the annular faces (23) of the spindle and to be in latching engagement with one of grooves (28).

2. Valve insert according to claim 1, characterized in that bearing (4) has, within zone (41) provided for abutment to one of the annular faces (23) of spindle (2), an internal diameter which is smaller than the external diameter of annular face (23) and which is provided, at the outer edge facing away from socket head (20), with a recess (43) in the manner of a cylinder jacket.

3. Valve insert according to claim 1 or 2, characterized in that bearing (4) is provided on the end side facing socket head (20) with a circular bearing face (44) for a press-in ring.

4. Valve insert according to one of claims 1 to 3, characterized in that an inner flange (45) is formed to bearing (4) on the side facing socket head (20), said inner flange engaging one of the grooves (28).

5. Valve insert according to claim 4, characterized in that the edges (47) of inner flange (45) are chamfered.

6. Valve insert according to one of claims 1 to 5, characterized in that an annular cavity (46) is provided between inner flange (45) engaging groove (28) and zone (41) pressed against annular face (23).

7. Valve insert according to one of claims 1 to 6, characterized in that bearing (4) is made from a polyamide-molybdenum compound.

## Revendications

1. Partie supérieure de valve pour des robinetteries sanitaires comportant une tête (1) en forme de douille susceptible d'être fixée dans un boîtier (8) de valve, ainsi qu'une axe rotatif (2) présentant une tête d'enfoncement (20) et traversant la tête (1) en son centre, axe sur lequel sont disposées de surfaces annulaires extérieures (23) avec lesquelles l'axe (2) est guidé radialement dans la tête (1), et des encoches (28) qui interrompent les surfaces annulaires (23) et reçoivent en partie des bagues d'étanchéité (24), caractérisée en ce que la tête (1) comporte sur l'arête intérieure tournée vers la tête d'enfoncement (20) un évidement annulaire (17) dans lequel un palier (4) élastique sur ses limites, sensiblement en forme de douille, contraint au préalable, est comprimé en appui sur l'une des surfaces annulaires (23) de l'axe et en pénetration en encliquetage dans l'une des encoches (28).

2. Partie supérieure de valve selon la revendication 1, caractérisés en ce que le palier (4) présente dans la zone (41) destinée à l'appui, sur l'une des surfaces annulaires (23) de l'axe (2), un diamètre intérieur qui est inférieur au diamètre extérieur de la surface annulaire (23) et comporte sur l'arête extérieure opposée à la tête d'enfoncement (20) un évidement (43) en forme d'enveloppe cylindrique.

3. Partie supérieure de valve selon la revendication 1 ou 2, caractérisée en ce que le palier (4) comporte sur la face frontale tournée vers la tête d'enfoncement (20) une surface d'appui circulaire (44) destinée à une bague poussoir.

4. Partie supérieure de valve selon l'une des revendications 1 à 3, caractérisée en ce qu'une bride intérieure (45) qui s'encliquète dans l'une des encoches (28) est conformée sur le palier (4) sur le côté tourné vers la tête d'enfoncement (20).

5. Partie supérieure de valve selon la revendication 4, caractérisée en ce que les arêtes (47) de la bride intérieure (45) sont inclinées.

6. Partie supérieure de valve selon l'une des revendications 1 à 5, caractérisée en ce qu'une rainure annulaire (46) est ménagée entre la bride intérieure (45) qui s'encliquète dans l'encoche (28) et la zone (41) comprimée sur la surface annulaire (23).

7. Partie supérieure de valve selon l'une des revendications 1 à 6, caractérisée en ce que le palier (4) consiste en un mélange de polyamide et de molybdène.

# Fig.1

# Fig.2